# EUROPÄISCHE PATENTSCHRIFT

(11) **EP 1 138 984 B1**
(45) Veröffentlichungstag und Bekanntmachung des Hinweises auf die Patenterteilung: **04.08.2004**
(21) Anmeldenummer: 01104955.8
(22) Anmeldetag: 01.03.2001
(51) Int. Cl.: F16H 59/10

(54) **Wählhebelschaltung für ein Getriebe in einem Fahrzeug**
Selection lever device for gearbox in a vehicle
Dispositif de levier sélecteur pour boîte de vitesses dans un véhicule

(30) Priorität: 28.03.2000 DE 10015432; 21.02.2001 DE 10108267
(43) Veröffentlichungstag der Anmeldung: 04.10.2001
(73) Patentinhaber: Preh GmbH, 97616 Bad Neustadt a.d. Saale (DE)
(72) Erfinder: Gessner, Volker, 97616 Salz (DE); Schmitt, Mario, 97616 Salz (DE)
(74) Vertreter: Dietrich, Barbara

(56) Entgegenhaltungen:
- EP-A- 1 076 192
- DE-A- 19 650 154
- DE-A- 19 821 361

## Beschreibung

Aus der DE 44 27 330 A1 ist eine Anordnung zur Erfassung einer eingestellten Schaltstellung an einem Kraftfahrzeugschaltgetriebe, insbesondere bei einer H-Schaltung bekannt. Mit Hilfe von mehreren Schaltern und zwei Schalthebelkontakten wird die Auslenkung des Schalthebels als auch die Bewegung in der eingelegten Schaltgasse ermittelt, wobei der Schalthebel in der neutralen Schaltstellung überwacht wird.

Die DE 197 48 115 A1 offenbart eine Vorrichtung zum elektromechanischen Schalten eines Gangwechselgetriebes. Zur Erfassung der Schaltposition sind mindestens zwei Magnete voneinander beabstandet am Umfang des Schaltgliedes vorgesehen. Hallsensoren, die zu diesen Magneten ausgerichtet sind, nehmen die Verschiebung des Schaltgliedes war. Für jede Position ist ein bestimmtes Muster der von den Hallsensoren gemessenen Feldstärke definierbar, so daß die Positionsbestimmung des Schaltgliedes unabhängig von absoluten Meßwerten ist.

Weiterhin ist aus der DE 198 11 972 A1 eine Wählhebelvorrichtung für ein Automatikgetriebe mit einer Automatik- und einer Schrittschaltgasse eines Kraftfahrzeuges bekannt, welches ohne mechanische Übertragungsglieder bei einem einfachen Aufbau eine möglichst große Sicherheit gegen Fehlbedienungen gewährleistet. Zusätzlich zur mechanischen Stellungsübertragung des Wählhebels in der Atomatikschaltgasse werden elektrische Signalaufnehmer und Signalgeber in der manuellen Schrittschaltgasse verwendet, die ein elektrisches Signal für den Schrittschaltbetrieb liefern.

Eine Anordnung zur Erfassung der Stellung eines Wähl- oder Schalthebels innerhalb einer Automatikgasse ist aus der DE 196 53 193 A1 bekannt. Der Wählhebel ist mit einer mehrgliedrigen Kontaktfeder elektrisch verbunden, wobei auf dieser eine Kontaktplatte mit Verstellung des Wählhebels hin und her verschoben wird. Die Anordnung gewährleistet, daß die Schaltungsanordnung zur Erfassung der Hebelstellung auch während temporärer Signalfehler, beispielsweise bei temporären Kontaktfehlern, intakt bleibt. In einer Fehlererkennungs- und -korrekturschaltung werden dazu die ermittelten Signale eingelesen und gemäß einer vorgegebenen Zuordnungsvorschrift, die in einer Tabelle hinterlegt ist, in ein korrigiertes Signal umgesetzt. Entspricht ein eingelesenes Bitmuster einem Fahrbereich, wird dieses Signal durchgeschoben. Wird hingegen ein fehlerhaftes Bitmuster erkannt, wird anhand der Tabelle ein dem erkannten Fahrbereich entsprechendes (korrigiertes) Signal ausgegeben.

In der EP 0 798 146 B1 wird eine Führungseinrichtung für einen Wählhebel für ein Automatikgetriebe offenbart. Hierbei ist in einer sogenannten "D"-Wählhebelstellung (Drive) der Wählhebel aus der Schaltgasse in eine manuelle Schaltgasse (Tipgasse) führbar, um in dieser Schaltgasse eine manuelle Geschwindigkeitswahl vornehmen zu können.

Eine weitere Führungseinrichtung ist aus der gattungsgemäßen DE 196 50 154 A1 bekannt. In einem Ausführungsbeispiel ist eine Automatikschaltvorrichtung mit Tipgasse beschrieben. Beim Wählen der Getriebegänge in der Automatikgasse wird mittels einem Schalt- oder Wählhebel ein Magnet als erstes Aktivierungselement an auf einer Leiterplatte installierten Sensoren entlang geführt. Dieses löst in den Sensoren ein Signal aus, was von einem Getriebeprozessor weiterverarbeitet und als Steuersignal an die Getriebesteuerung weitergeleitet wird. Ein zweites Aktivierungselement, vorwiegend auch ein Magnet, wird beim Bewegen des Schalthebels in der Tipgasse an einzelnen Sensoren in der Tipgasse entlang geführt, wobei in den jeweiligen Sensoren ein entsprechendes Signal hervorgerufen wird, welches weiterverarbeitet und sowohl an die Getriebesteuerung als auch die Schaltstellungsanzeige weitergeleitet wird.

Die EP 0 783 081 A1 offenbart die Hinterleuchtung einer lichtdurchlässigen Blende zur sichtbaren Positionsanzeige einer Wählhebelstellung.

Bei den vorgenannten Lösungen wird das Vorhandensein der Aktivierungselemente als auch der Sensoren vorausgesetzt. Insbesondere bei Automatikschaltgetrieben mit Automatikschaltgasse und Tipgasse birgt dieses Voraussetzen Unfallrisiken in sich.

Die Aufgabe der Erfindung besteht nun darin, eine Wählhebelschaltung aufzuzeigen, bei der mit einem Minimum an Bauelementen das Vorhandensein der für die Schaltung eines Getriebes und /oder Wählhebelpositionsanzeige notwendigen elektronischen Bauelemente überprüft wird.

Gelöst wird die Aufgabe durch die Merkmale des Patentanspruches 1.

Der Erfindung liegt die Idee zugrunde, zwei Signalgeber mit einem Wählhebel derart zu koppeln, daß beim Bewegen des Wählhebels ein Signalgeber in der ersten Gasse (Automatikschaltgasse) an Signalaufnehmern der ersten Gasse vorbei geführt wird, während der zweite Signalgeber in der zweiten Gasse (Schrittschaltgasse, Tipgasse) nacheinander aus den Einflußbereichen der Signalaufnehmern der zweiten Gasse heraus bzw. wieder in diese später wieder hinein geführt wird. Dabei besteht eine zwangsweise Bewegungsankopplung der Signalgeber an die Bewegungsbahn eines Wählhebels.
Der zweite Signalgeber ist im Unterschied zum ersten Signalgeber kein Aktivierungselement der Wählhebelschaltung für eine Getriebesteuerung, sondern ein sogenanntes Diagnoseelement.
Mit dieser Wählhebelschaltung kann vorab als auch während der Fahrt eine Diagnose auf das Vorhandensein bestimmter, zumindest für die Schaltung des Getriebes bzw. Ansteuerung der Getriebesteuerung notwendiger elektronischer Bauelemente einer Wählhebelschaltung vorgenommen werden, wobei bei Fehlen eines entsprechendes Signals durch eine Diagnoseelektronik ein Signal ausgegeben wird, was zur Stillegung eines Kraft- oder Nutzfahrzeuges führen kann.

Dazu sind Signalaufnehmer, d.h., Sensoren der ersten als auch der zweiten Gasse mit der Diagnoseelektronik verbunden. Mit Hilfe dieser Signale wird das Vorhandensein oder Nichtvorhandensein des ersten Siganlgebers als auch der Signalaufnehmer in der zweiten Gasse überprüft.

Der erste Signalgeber ist mit einem Wählhebel direkt, beispielsweise durch das Einrasten und/oder Verkleben in eine entsprechende Aufnahme etc. oder indirekt durch Übertragungselemente, wie Schieber oder Bowdenzug, verbunden, wobei eine direkte Anbringung am Wählhebel vorteilhaft ist.

Ist ein zweiter Signalgeber als zweites Aktivierungselement in der Wählhebelschaltungeingebunden, beispielsweise für die Aktivierung der Signalaufnehmer in der zweiten Gasse, kann auch diese in äquivalenter Weise überwacht und diagnostiziert werden.

Beim Fahrbetrieb kann durch die Diagnoseelektronik in jeder Wählhebelstellung das Vorhandensein des Aktivierungselementes in der ersten Gasse überprüft werden, was insbesondere beim Einschwenken des Wählhebels in die zweite Gasse von Bedeutung ist, wenn der erste Signalgeber der ersten Gasse auch als Siganlgeber in der zweiten Gasse genutzt wird und dazu der erste Signalgeber aus der ersten Gasse mit Hilfe des Wählhebels in die zweite Gasse geführt wird. Bis zu dieser Phase können auch die Sensoren in der zweiten Gasse einzeln und nacheinander überprüft werden.

Wird der Wählhebel in die zweite Gasse überführt, wird der zweite Signalgeber aus dem Einflußbereich der Signalaufnehmer in der zweiten Gasse heraus bewegt, um die funktionale Aufgabe der Signalaufnehmer (manuelle Geschwindigkeitseinstellung) in der zweiten Gasse beim Fahrbetrieb nicht zu beeinflussen.

Vorzugsweise ist die Diagnoseelektronik auf einer gemeinsamen Leiterplatte einer Elektronikschaltung der Getriebesteuerung und/oder der Wählhebelschaltung integriert und beispielsweise unterhalb einer Wählhebelabdeckung, auch Blende genannt, angebracht.

Die Signalaufnehmer arbeiten mit den Signalgebern berührungslos zusammen. Dabei können die Signalaufnehmer magnetfeldabhängige Sensoren sein, wie beispielsweise Hall-Sensor, Reedkontakt oder Magnetkontakt, wenn die Signalgeber Magneten sind.

Weitere Vorteile ergeben sich aus der folgenden Zeichnungsbeschreibung. In den Zeichnungen ist ein Ausführungsbeispiel der Erfindung dargestellt, welches zahlreiche Merkmale in Kombination enthält. Der Fachmann wird die Merkmale zweckmäßigerweise auch einzeln betrachten und zu sinnvollen weiteren Kombinationen zusammenfassen.

Es zeigt:
- Fig. 1: in einer Draufsichtdarstellung eine Wählhebelschaltung für ein Automatikgetriebe,
- Fig. 2: eine tabellarische Darstellung der in einer Diagnoseelektronik zu verarbeitenden Signale,
- Fig. 3: in tabellarischer Darstellung die von der Diagnoseelektronik auszugebenden Signale.

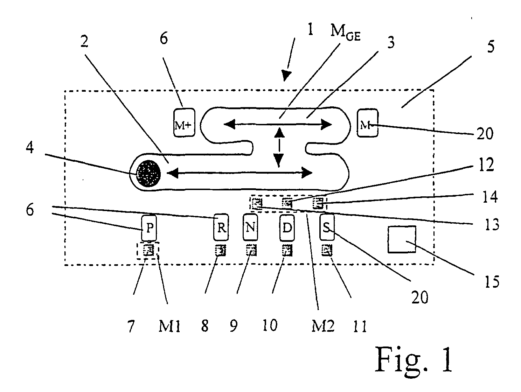

In Fig. 1 ist eine Wählhebelschaltung 1 mit einer ersten Gasse 2, einer Automatikschaltgasse, und einer zweiten Gasse 3, einer Tipgasse, für ein nicht näher dargestelltes Automatikschaltgetriebe eines Kraft- bzw. Nutzfahrzeuges dargestellt. Mit 4 ist ein Wählhebel gekennzeichnet, der innerhalb der Gassen 2, 3 bewegt wird und von einer Gasse 2, 3 in die andere verschwenkbar ist. Die Wählhebelschaltung 1 weist eine Wählhebelabdeckung (Blende) 5 auf, die die Gassen 2, 3 umrahmt. Vorzugsweise in der Wählhebelabdeckung 5 sind hinterleuchtbare Wählhebelpositionsanzeigen 6 für in den Gassen 2, 3 einzustellende Wählhebelpositionen P, R, N, D, S, M+ sowie M- angebracht. Der Übersichtlichkeit halber sind diese mit 20 gekennzeichnet, wobei hierzu auch die nicht hinterleuchtete Wählhebelposition M_{GE} zählt. In direkter Nähe zu den Wählhebelpositionen 20 sind Signalaufnehmer, Sensoren 7 bis 14, angeordnet, die der Übersichtlichkeit halber zeichnerisch direkt an den Wählhebelpositionsanzeigen 6 zeichnerisch dargestellt sind. Die Sensoren 7 bis 14 als auch die nicht näher dargestellten Lampen der Wählhebelpositionsanzeigen 6 befinden sich vorzugsweise zusammen mit weiteren Bauelementen der Wählhebelschaltung 1 auf einer hinter der Wählhebelabdeckung 5 befindlichen, nicht näher dargestellten Leiterplatte.
Die Sensoren 7 bis 14, die berührungslos arbeiten, sind in der Regel Hall-Sensoren, Magnet- oder Reedkontakte, die Signale Pₐ, P_{aR}, P_{aN}, P_{aD}, P_{aS} sowie M_{GE}, M+ und M- für die Elektronik einer Getriebesteuerung (nicht näher dargestellt) liefern und/oder die jeweilige Wählhebelpositionsanzeige 6 zuschalten. Diese Signale Pₐ, P_{aR}, P_{aN}, P_{aD}, P_{aS} der Automatikschaltgasse 2 sowie M_{GE}, M+ und M- der Tipgasse 3 werden durch einen ersten Signalgeber M1 als Aktivierungselement, beispielsweise ein Magnet, an den Sensoren 7 bis 14 hervorgerufen. In der bevorzugten und hier beschriebenen Ausführung ist nur ein Aktivierungselement M1 Bestandteil der Wählhebelschaltung 1.
In einer weiteren, speziellen Funktion dienen insbesondere die Sensoren 7 bis 11, vorrangig jedoch der Sensor 7, zur Diagnose auf das Vorhandenseins des ersten Signalgebers M1. Dazu sind die Sensoren 7 bis 14 mit eine Diagnoseelektronik 15 elektrisch verbunden, die die Signale der Sensoren 7 bis 14 auswertet und beispielsweise für die nicht näher dargestellte Elektronik der Getriebesteuerung des Automatikgetriebes aufbereitet.

Der erste Signalgeber M1 dient vorrangig zur eigentlichen Erkennung der eingestellten Wählhebelposition bzw. -stellung 20 und/oder einer daraus resultierenden Funktionsanwahl für die Elektronik der Getriebesteuerung und ist mit dem Wählhebel 4 derart verbunden, daß bei Verstellung des Wählhebels 4 der Signalgeber M1 mit verstellt wird und. Dieser Signalgeber M1 ist in der Wählhebelposition P vorzugsweise in direkter Nähe zum Sensor 7 angebracht.

Ein weiterer Signalgeber M2, beispielsweise auch ein Magnet, ist mit dem Wählhebel 4 und dem ersten Slgnalgeber M1 funktional verbunden. Der zweite Signalgeber M2 dient zur Diagnose der Sensoren 12 bis 14 in der Tipgasse 3, die vorzugsweise auf ein Magnetfeld ansprechende Kontakte sind. Auch dieser zweite Signalgeber M2 ist mit dem Wählhebel 4 derart verbunden, daß bei Verstellung des Wählhebels 4 das Diagnoseelement M2 mit verstellt wird. Das Diagnoseelement M2 ist dabei relativ zum Aktivierungsmagneten M1 angeorndet, daß in der Wählhebelposition P des Wählhebels 4 der zweite Signalgeber M2 mit allen drei Sensoren 12 bis 14 vorzugsweise gleichzeitig kontaktiert. Der zweite Signalgeber M2 kann dabei ein segmentierter oder einfacher Magnet sein. Hieraus ergibt sich die notwendige Länge des Signalgebers M2. Es ist aber auch möglich, vereinzelte Signalgeber den Sensoren 12 bis 14 zuzuordnen, so daß je Signalgeber jeweils nur einen Sensor 12, 13 oder14 bei Verstellung des Wählhebels 4 beeinflußt wird.

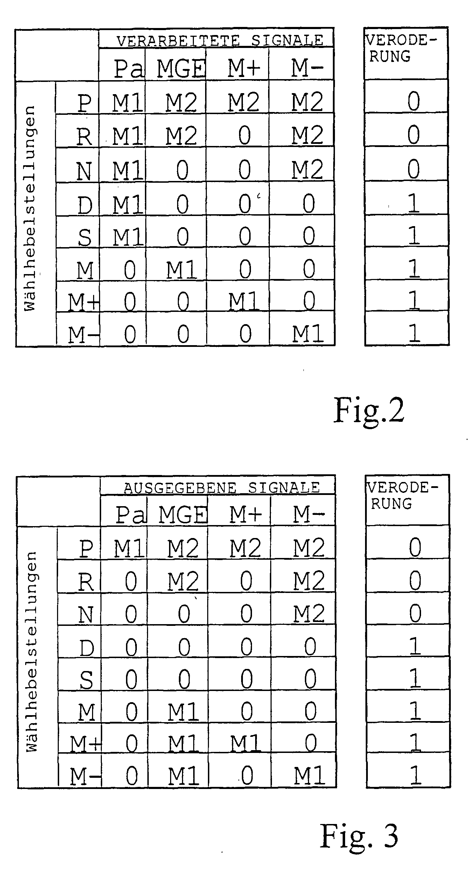

Die Auswertung und Aufbereitung dieser Signale ist in der Fig. 2 und Fig. 3 tabellarisch dargestellt. Dabei wird zwischen den innerhalb der Diagnoseelektronik 15 zu verarbeitenden Signalen (fehlererkennende Signale) nach Fig. 2 und den beispielsweise an die Elektronik der Getriebesteuerung auszugebenden Signalen (fehlermeldende Signale) nach Fig.3 unterschieden.

Entsprechend der Stellung des Wählhebels 4 in den Wählhebelpositionen 20 werden durch die Sensoren 7 bis 14 und den Signalgebern M1 und/oder M2 die zu verarbeitenden Signale Pa, M_{GE}, M+, M- initiiert.

In der Wählhebelposition P (Parken) wird vorzugsweise eine Vorabdiagnose vorgenommen, was beispielsweise bereits mit dem Einführen des Zündschlüssels in das Zündschloß (nicht näher dargestellt) erfolgen kann. Bei Vorhandensein des ersten Signalgebers M1 werden durch den Sensor 7 das Signal Pa und durch den zweiten Signalgeber M2 und die Sensoren 12 bis 14 die Signale M_{GE}, M+ und M- erzeugt. Diese in der Diagnoseelektronik 15 ankommenden Einzelsignale werden intern bewertet, hier durch einen Vergleich mit einem abgelegten Muster. In einer ersten Aussage gelangt diese Information an die Elektronik der Getriebesteuerung, wodurch diese eine Information über das Vorhandensein des ersten Signalgebers M1 und die Funktion der einzelnen Sensoren 12 bis 14 in der Tipgasse 3 erhält. Fehlt jedoch eines der Signale Pₐ, M_{GE}, M+ oder M- wird der Elektronik der Getriebesteuerung mitgeteilt, daß entweder der erste Siganlgeber M1 oder wenigstens einer der Sensoren 7, 12, 13 oder 14 funktional, d.h. hardwaremäßig, nicht vorhanden sind. Durch zusätzliche Maßnahmen kann dann ein Starten des Fahrzeuges verhindert werden.

Dieser ersten aussagefähigen Diagnose schließen sich vorzugsweise weitere Überwachungen im Fahrbetrieb an.
Nach Verlassen des Wählhebels 4 aus der Wählhebelposition P wird zusammen mit dem Wählhebel 4 der Signalgeber M1 in Richtung R verstellt, und zwar dann, wenn das Fahrzeug rückwärts fahren soll. In dieser Wählhebelposition R wird, bedingt durch den Sensor 8 und dem verstellten ersten Siganlgeber M1, ein Signal Pa_{R} erzeugt, was in der Diagnoseelektronik 15 intern registriert und als " Signalgeber M1 weiterhin vorhanden" intern ausgewertet wird. Gleichzeitig mit der Verstellung des Wählhebels 4 wird auch der zweite Signalgeber M2 mit verstellt, der nun aus dem Einflußbereich des Sensors 13 geführt wird und nur noch die Sensoren 12 und 14 anspricht, wodurch die Signale M_{GE} und M- generiert werden. Das Fehlen des Signals M+ wird in der Diagnoseelektronik 15 als richtig erkannt. An die Elektronik der Getriebesteuerung wird unabhängig von der Diagnoseelektronik 15 jedoch nur das Signal Pa_{R} gegeben, wenn die Elektronik der Getriebesteuerung ein derartiges Signal vom Sensor 8 benötigt.

Bei einer weiteren Verstellung in die Wählhebelposition N wird durch den ersten Signalgeber M1 am Sensor 9 ein Signal Pa_{N} erzeugt, während der zweite Signalgeber M2 am Sensor 14 nur noch das Signal M- bewirkt. Auch hier wird das Fehlen der Signale M+ als auch M_{GE} in der Diagnoseelektronik 15 als richtig definiert. An die Elektronik der Getriebesteuerung gelangt auch hierbei unabhängig von der Diagnoseelektronik 15 das Signal Pa_{N}.

Bei Verstellung des Wählhebels 4 in die Wählhebelposition D ist der erste Signalgeber M1 am Sensor 10 und schaltet diesen, während der zweite Signalgeber M2 keinen Sensor 12 bis 14 mehr beeinflußt. Das erzeugte Signal Pa_{D} dient gleichfalls zur internen Überwachung auf das Vorhandensein des Magneten M1 in der Wählhebelposition D.

Diese Information beim Verstellen des Wählhebels 4 bezüglich des Vorhandenseins der einzelnen Signale M_{GE}, M+ und M- kann dazu verwendet werden, eine getrennte, d.h., auch eine Einzelanalyse der drei Sensoren 12, 13, 14 innerhalb der Diagnoseelektronik 15 noch vor dem Schalten in die Wählhebelposition D vornehmen zu können.

In der Wählhebelposition D kann der Wählhebel 4 auf Wunsch in die Tipgasse 3 überführt werden. Da der erste Signalgeber M1 vorzugsweise nunmehr auch die Aktivierung der Sensoren 12 bis 14 in der Tipgasse 3 vornimmt, ist es notwendig, diese Mittelstellung "M_{GE} " der Elektronik der Getriebesteuerung zusätzlich anzuzeigen, um dieser mitzuteilen, daß sich der Magnet M1 in der Tipgasse befindet. Entsprechend dieser Vorgabe werden die Signale M_{GE}, M+ und M- in der Diagnoseelektronik 15 durch einen nicht näher dargestellten Transistor vorzugsweise verodert, d.h., der verwendete Transistor ist als Oder-Glied geschaltet. Das bewirkt, daß das M_{GE}-Signal (Wählhebelmittelstellung in der Tipgasse 3) auch während des Schalten des Wählhebels 4 in die Wählhebelpositionen M+ und M- in der Tipgasse 3 an die Elektronik der Getriebesteuerung abgegeben wird (Wischer-Prinzip). In den Wählhebelpositionen P bis N ist diese Veroderung der Sensorsignale abgeschaltet.

Bei Überführung des Wählhebels 4 von der Wählhebelposition "D" aus der Automatikschaltgasse 2 in die Tipgasse 3 wird der erste Signalgeber M1 an den Sensor 12 geführt, wodurch dieser das M_{GE}-Signal liefert. Die Signale M+ und M- werden in dieser Position nicht erzeugt. Der Wählhebel 4 kann nun innerhalb der Tipgasse 3 entweder auf die Wählhebelposition M+ ( Beschleunigung) oder Wählhebelposition M-(Reduzierung) verstellt werden. Diese Verstellung bewirkt ein Aktivierung der Sensoren 13 oder 14 durch den ersten Signalgeber M1, welche an die Elektronik der Getriebesteuerung und an die Diagnoseelektronik 15 gegeben werden. Eine separate Diagnose kann, muß aber zu diesem Zeitpunkt nicht mehr erfolgen.

Es versteht sich, daß im Rahmen des erfinderischen Gedankens Änderungen möglich sind. So können durch die Sensoren 7 bis 14 weitere, der Übersichtlichkeit halber nicht näher dargestellte Lampen in der Wählhebelabdeckung 5 für eine direkt visuelle Diagnoseanzeige genutzt werden.

## Patentansprüche

1. Wählhebelschaltung (1) für ein Getriebe in einem Fahrzeug
- mit einer ersten Gasse (2) zum Anwählen von unterschiedlichen Fahrbereichen (P, R, N, D, S) und einer parallel dazu zweiten Gasse (3) zur sequentiellen Anwahl weiterer Fahrbereiche (M+, M-),
- mit einem Wählhebel (4) zum Einstellen der Fahrbereiche (P, R, N, D, S) sowie der sequentiell anwählbaren Fahrbereiche (M+, M-),
- mit Signalaufnehmer (7 bis 14) in der ersten Gasse (2) sowie in der zweiten Gasse (3) und
- mit einem ersten Signalgeber (M1) in der ersten Gasse (2) und einem weiteren, zweiten Signalgeber (M2) in der zweiten Gasse (3), wobei
- beide Signalgeber (M1, M2) derart mit dem Wählhebel (4) verbunden sind, **dadurch gekennzeichnet daß**
- bei Verstellung des Wählhebels (4) in der ersten Gasse (2) der erste Signalgeber (M1) jeweils mit den Signalaufnehmern (7 bis 11) der ersten Gasse (2) und der zweite Signalgeber (M2) mit den Signalaufnehmern (12 bis 14) der zweiten Gasse (3) zusammenwirkt, wobei
- der zweite Signalgeber (M2) relativ zum ersten Signalgeber (M1) derart angeordnet ist, daß dieser bei Stellung des Wählhebels (4) in einem ersten Fahrbereich (P) innerhalb der ersten Gasse die Signalaufnehmer (12 bis 14) der zweiten Gasse (3) anspricht und bei Verstellung des Wählhebels (4) in andere Fahrbereiche (R, N, D, S) innerhalb der ersten Gasse (2) nacheinander aus dem Einflußbereich der einzelnen Signalaufnehmer (12 bis 14) heraus geführt wird,
- bei Verstellung des Wählhebels (4) in die zweite Gasse (3) der erste Signalgeber (M1) in den Einflußbereich der Signalaufnehmer (12 bis 14) der zweiten Gasse (3) geführt wird, und
- die Signalaufnehmer (7 bis 14) mit einer Diagnoseelektronik (15) elektrisch verbunden sind.

2. Wählhebelschaltung nach Anspruch 1, **dadurch gekennzeichnet, daß** der erste Signalgeber (M1) als Aktivierungselement der Wählhebelschaltung (1) und der zweite Signalgeber als Diagnoseelement (M2) fungiert.

3. Wählhebelschaltung nach einem der Ansprüche 1 oder 2, **dadurch gekennzeichnet, daß** die beiden Signalgeber (M1, M2) berührungslos arbeitende Geber sind.

4. Wählhebelschaltung nach einem der vorgenannten Ansprüche 1 bis 3, **dadurch gekennzeichnet, daß** die Signalaufnehmer (7 bis 14) berührungslos arbeitende Sensoren sind.

5. Wählhebelschaltung nach einem oder mehreren der vorgenannten Ansprüche, **dadurch gekennzeichnet, daß** die Signalgeber (M1, M2) Magnete und die Signalaufnehmer (7 bis 14) Hall-Sensoren, Reed-Kontakte und/oder Magnetkontakte sind.

6. Wählhebelschaltung nach einem der vorgenannten Ansprüche, **dadurch gekennzeichnet, daß** der zur Diagnose der Signalaufnehmer (12 bis14) in der zweiten Gasse (3) verwendete Signalgeber (M2) größenmäßig derart gestaltet ist, daß dieser in einer ersten Wählhebelposition (P) diese Sensoren (12 bis 14) gleichzeitig anspricht, wobei drei verschiedene Signale (M_{GE}, M+, M-) erzeugt werden, die an der Diagnoseelektronik (15) zur internen Weiterverarbeitung gegeben werden.

7. Wählhebelschaltung nach einem der vorgenannten Ansprüche, **dadurch gekennzeichnet, daß** die Prüfung auf das Vorhandensein des ersten Signalgebers (M1) in der ersten Gasse (2) und/oder der zumindest drei Signalaufnehmer (12 bis 14) in der zweiten Gasse (3) vorab im ersten Fahrbereich (P) erfolgt.

8. Wählhebelschaltung nach einem der Ansprüche 1 bis 7, **dadurch gekennzeichnet, daß** zur Anzeige der eingestellten Position des Wählhebels (4) Wählpositionsanzeigen (6) in einer Wählhebelabdeckung (5) integriert sind.

9. Wählhebelschaltung nach Anspruch 8, **dadurch gekennzeichnet, daß** die Wählpositionsanzeigen (6) hinterleuchtbar sind, wobei die Zuschaltung der Leuchten beim Verstellen des ersten Signalgebers (M1) bzw. des zweiten Signalgebers (M2) erfolgt, wozu die Sensoren (7-14) mit jeweils einer Leuchte hinter den Wählpositionsanzeigen (6) verbunden sind.

10. Wählhebelschaltung nach einem der Ansprüche 1 bis 9, **dadurch gekennzeichnet**, die Diagnoseelektronik (15) mit weiteren Bauelementen der Wählhebelschaltung (1) und/oder der Elektronik der Getriebesteuerung gemeinsamen auf einer Leiterplatte angeordnet ist.

## Claims

1. Selection lever circuit (1) for a gearbox in a motor vehicle
- with a first channel (2) for selecting different driving ranges (P, R, N, D, S) and a second channel (3), parallel thereto, for sequential selection of further driving ranges (M+, M-),
- with a selection lever (4) for setting the driving ranges (P, R, N, D, S) and the sequentially selectable driving ranges (M+, M-),
- with signal transducers (7 to 14) in the first channel (2) and in the second channel (3) and
- with a first signal generator (M1) in the first channel (2) and a further, second signal generator (M2) in the second channel (3), wherein
- both signal generators (M1, M2) are connected to the selection lever (4) in such a way, **characterised in that**
- when the selection lever (4) is displaced in the first channel (2) the first signal generator (M1) interacts with the signal transducers (7 to 11) of the first channel (2) and the second signal generator (M2) with the signal transducers (12 to 14) of the second channel (3) in each case, wherein
- the second signal generator (M2) is arranged relative to the first signal generator (M1) in such a way that when the selection lever (4) is positioned in a first driving range (P) within the first channel it actuates the signal transducers (12 to 14) of the second channel (3) and when the selection lever (4) is displaced into other driving ranges (R, N, D, S) within the first channel (2) is guided in succession out of the range of influence of the individual signal transducers (12 to 14)
- when the selection lever (4) is displaced into the second channel (3) the first signal generator (M1) is guided into the range of influence of the signal transducers (12 to 14) of the second channel (3) and
- the signal transducers (7 to 14) are electrically connected to diagnostic electronics (15).

2. Selection lever circuit according to claim 1, **characterised in that** the first signal generator (M1) acts as activating element of the selection lever circuit (1) and the second signal generator as diagnostic element (M2).

3. Selection lever circuit according to one of claims 1 or 2, **characterised in that** the two signal generators (M1, M2) are generators operating without contact.

4. Selection lever circuit according to one of the aforementioned claims 1 to 3, **characterised in that** the signal transducers (7 to 14) are sensors operating without contact.

5. Selection lever circuit according to one or more of the aforementioned claims, **characterised in that** the signal generators (M1, M2) are magnets and the signal transducers (7 to 14) are Hall sensors, reed contacts and/or magnetic contacts.

6. Selection lever circuit according to one of the aforementioned claims, **characterised in that** the signal generator (M2) used for diagnosis of the signal transducers (12 to 14) in the second channel (3) is configured in terms of size in such a way that in a first selection lever position (P) it simultaneously actuates these sensors (12 to 14), three different signals (M_{GE}, M+, M-) being generated, which are given to the diagnostic electronics (15) for internal further processing.

7. Selection lever circuit according to one of the aforementioned claims, **characterised in that** testing for the presence of the first signal generator (M1) in the first channel (2) and/or the at least three signal transducers (12 to 14) in the second channel (3) takes place in advance in the first driving range (P).

8. Selection lever circuit according to one of claims 1 to 7, **characterised in that** to indicate the position of the selection lever (4) which has been set, selection lever indicators (6) are integrated in a selection lever cover (5).

9. Selection lever circuit according to claim 8, **characterised in that** the selection position indicators (6) can be back-lit, switching on the lights taking place when the first signal generator (M1) or the second signal generator (M2) is displaced, for which purpose the sensors (7 to 14) are connected in each case to a light behind the selection position indicators (6).

10. Selection lever circuit according to one of claims 1 to 9, **characterised in that** the diagnostic electronics (15) are arranged in common with further component parts of the selection lever circuit (1) and/or the electronics of the gearbox control system on a conductor plate.

## Revendications

1. Dispositif de levier sélecteur (1) pour une boîte de vitesses dans un véhicule
- avec une première ligne de commande (2) pour sélectionner différents programmes de conduite (P, R, N, D, S) et une deuxième ligne de commande (3) parallèle pour la sélection séquentielle d'autres programmes de conduite (M+, M-),
- avec un levier de sélection (4) pour le réglage des programmes de conduite (P, R, N, D, S) ainsi que des programmes de conduite à sélection séquentielle (M+, M-),
- avec des capteurs de signaux (7 à 14) dans la première ligne de commande (2) ainsi que dans la deuxième ligne de commande (3) et
- avec un premier générateur de signaux (M1) dans la première ligne de commande (2) et un autre deuxième générateur de signaux (M2) dans la deuxième ligne de commande (3), sachant que
- les deux générateurs de signaux (M1, M2) sont reliés au levier de sélection (4), **caractérisé en ce que**
- lors du déplacement du levier de sélection (4) dans la première ligne de commande (2), le premier générateur de signaux (M1) agit respectivement avec les capteurs de signaux (7 à 11) de la première ligne de commande (2) et le deuxième générateur de signaux (M2) avec les capteurs de signaux (12 à 14) de la deuxième ligne de commande (3), sachant que
- le deuxième générateur de signaux (M2) est disposé par rapport au premier générateur de signaux (M1) de telle sorte que ce dernier, en position du levier de sélection (4) dans un premier programme de conduite (P) à l'intérieur de la première ligne, excite les capteurs de signaux (12 à 14) de la deuxième ligne de commande (3) et, lors du déplacement du levier de sélection (4) dans les autres programmes de conduite (R, N, D, S) à l'intérieur de la première ligne de commande (2), il est amené hors de la zone d'influence des différents capteurs de signaux (12 à 14) l'un après l'autre,
- lors du déplacement du levier de sélection (4) dans la deuxième ligne de commande (3), le premier générateur de signaux (M1) est amené dans la zone d'influence des capteurs de signaux (12 à 14) de la deuxième ligne de commande (3) et
- les capteurs de signaux (7 à 14) sont reliés électriquement à une électronique de diagnostic (15).

2. Dispositif de levier sélecteur selon la revendication 1, **caractérisé en ce que** le premier générateur de signaux (M1) fonctionne comme élément d'activation du dispositif de levier sélecteur (1) et le deuxième générateur de signaux comme élément de diagnostic (M2).

3. Dispositif de levier sélecteur selon l'une quelconque des revendications 1 ou 2, **caractérisé en ce que** les deux générateurs de signaux (M1, M2) sont des générateurs fonctionnant sans contact.

4. Dispositif de levier sélecteur selon l'une quelconque des revendications précitées 1 à 3, **caractérisé en ce que** les capteurs de signaux (7 à 14) sont des capteurs fonctionnant sans contact.

5. Dispositif de levier sélecteur selon une ou plusieurs des revendications précitées, **caractérisé en ce que** les générateurs de signaux (M1, M2) sont des aimants et les capteurs de signaux (7 à 14) des capteurs de Hall, des contacts Reed et / ou des contacts magnétiques.

6. Dispositif de levier sélecteur selon l'une quelconque des revendications précitées, **caractérisé en ce que** le générateur de signaux (M2) utilisé pour le diagnostic des capteurs de signaux (12 à 14) dans la deuxième ligne de commande (3) est configuré du point de vue taille de telle sorte que ce dernier, dans une première position du levier sélecteur (P), excite des capteurs (12 à 14) en même temps, lors de quoi trois signaux différents (M_{GE}, M+, M-) sont engendrés, qui sont transmis à l'électronique de diagnostic (15) pour poursuite interne du traitement.

7. Dispositif de levier sélecteur selon l'une quelconque des revendications précitées, **caractérisé en ce que** le contrôle pour présence du premier générateur de signaux (M1) dans la première ligne de commande (2) et / ou des au moins trois capteurs de signaux (12 à 14) dans la deuxième ligne de commande (3) s'effectue avant tout dans le premier programme de conduite (P).

8. Dispositif de levier sélecteur selon l'une quelconque des revendications 1 à 7, **caractérisé en ce que** des afficheurs de position sélectionnée (6) sont intégrés dans un recouvrement du levier de sélection (5) pour l'affichage de la position réglée du levier de sélection (4).

9. Dispositif de levier sélecteur selon la revendication 8, **caractérisé en ce que** les afficheurs de position sélectionnée (6) peuvent être rétro-éclairés, sachant que le contact aux lampes s'effectue lors du déplacement du premier générateur de signaux (M1), respectivement du deuxième générateur de signaux (M2), ce pour quoi les capteurs (7 à 14) sont reliés chacun à une lampe derrière les afficheurs de position sélectionnée (6).

10. Dispositif de levier sélecteur selon l'une quelconque des revendications 1 à 9, **caractérisé en ce que** l'électronique de diagnostic (15) est disposée ensemble sur une plaque à circuits imprimés avec d'autres éléments constitutifs du dispositif de levier sélecteur (1) et / ou de l'électronique de la commande de la boîte de vitesses.
